# EUROPEAN PATENT APPLICATION

(11) **EP 2 113 725 A2**
(43) Date of publication of application: **04.11.2009**
(21) Application number: 09158851.7
(22) Date of filing: 27.04.2009
(51) Int. Cl.: F24F 11/00, F24F 1/00, F24F 12/00

(54) **Control method for a ventilating apparatus**

(30) Priority: 01.05.2008 KR 20080040990
(71) Applicant: LG Electronics Inc., Seoul, 150-721 (KR)
(72) Inventor: Han, Sung Won, 153-802, Seoul (KR); Choi, Keun Hyoung, 153-802, Seoul (KR); Lee, Woo Ram, 153-802, Seoul (KR)
(74) Representative: Vossius & Partner

(57) **Abstract**

A control method for a ventilating apparatus is disclosed, in which a ventilating function and a cooling and heating function are performed selectively or simultaneously within one casing. The control method for a ventilating apparatus comprises determining an operation mode; and performing the operation mode such as a ventilating operation mode and a cooling and heating operation mode respectively or simultaneously within a single ventilating apparatus in accordance with the determined operation mode.

## Description

The present invention relates to a control method for a ventilating apparatus, and more particularly to, a control method for a ventilating apparatus, in which a ventilating function and a cooling and heating function can be performed simultaneously or selectively in the ventilating apparatus.

A ventilating apparatus is to flow out the room air and at the same time flow in the outdoor air, thereby maintaining freshness of the air in a room.

The ventilating apparatus basically includes a casing, a room air suction unit provided inside the casing to suck the room air, an outdoor air suction unit, a blower fan, and a pre-heat exchanger enabling heat exchange between the room air and the outdoor air.

Recently, it is general that a ventilating apparatus and an air-conditioner are provided, wherein the ventilating apparatus serves to maintain freshness of the room air and at the same time control an inner temperature within a proper range, and the air-conditioner serves to perform cooling and heating.

However, it is general that the ventilating apparatus provided with a pre-heat exchanger and the air-conditioner provided with an indoor unit and an outdoor unit are separately provided within a building. In this case, a problem occurs in that more cost and more space are relatively consumed to arrange the ventilating apparatus and the air-conditioner.

In other words, if the ventilating apparatus and the air-conditioner are simultaneously provided, since a duct connected with the ventilating apparatus and a duct connected with the air-conditioner should be provided separately, problems occur in that pipe arrangement becomes complicated and the cost required for arrangement of the ventilating apparatus and the air-conditioner increases.

Furthermore, since the air exhausted to the room through the ventilating apparatus is the outdoor air heat-exchanged with the room air and the air exhausted out through the air-conditioner is the room air heat-exchanged with a refrigerant, two air flows of different temperatures occur in one space, whereby unbalanced distribution of temperature is caused.

Furthermore, since an outlet connected with the air-conditioner and an outlet connected with the ventilating apparatus are respectively provided in a room, the air is locally exhausted during ventilation or cooling and heating without being exhausted through the entire of the room. For this reason, a problem occurs in that each outlet is not used efficiently. As a result, a problem occurs in that ventilation or cooling and heating effects do not reach the entire of the room.

Accordingly, the present invention is directed to a control method for a ventilating apparatus, which substantially obviate one or more problems due to limitations and disadvantages of the related art.

An object of the present invention is to provide a control method for a ventilating apparatus, in which a ventilating function and a cooling and heating function can be performed simultaneously or selectively in the ventilating apparatus.

Additional advantages, objects, and features of the invention will be set forth in part in the description which ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a control method for a ventilating apparatus comprises determining an operation mode; and performing the operation mode such as a ventilating operation mode and a cooling and heating operation mode respectively or simultaneously within a single ventilating apparatus in accordance with the determined operation mode.

Furthermore, the operation mode includes a ventilating operation mode performing heat exchange between the outdoor air and the room air while flowing in the outdoor air and flowing out the room air; a cooling and heating operation mode performing heat exchange between the room air and a refrigerant of a heat exchanger; and a simultaneous operation mode performing the ventilating operation mode and the cooling and heating operation mode.

If the operation mode is determined as the ventilating operation mode, the step of performing the operation mode includes opening a first inlet to flow the outdoor air into a pre-heat exchanger; flowing the room air into a pre-heat exchanger and a second inlet and preventing the room air from flowing into a heat exchanger; driving an air-supply fan unit to flow the outdoor air into a room; and driving an air-exhaust fan unit to exhaust the room air to the outside.

Furthermore, the step of opening the first inlet is performed by opening a first switching damper arranged in the first inlet, and the step of preventing the air from flowing into the heat exchanger is performed by closing a second switching damper arranged between the second inlet and the heat exchanger.

Furthermore, if the operation mode is determined as the cooling and heating operation mode, the step of performing the operation mode includes preventing the outdoor air from flowing into the first inlet; guiding the room air to directly flow into the heat exchanger after flowing into the second inlet; driving the air-supply fan unit to move the room air to the heat exchanger; and flowing the refrigerant in and out the heat exchanger so that the refrigerant is heat-exchanged with the room air in the heat exchanger.

Furthermore, the step of preventing the room air from flowing into the first inlet is performed by closing the first switching damper provided in the first inlet, and the step of guiding the room air to directly flow into the heat exchanger is performed by opening the second switching damper provided between the heat exchanger and the second inlet.

Furthermore, if the operation mode is determined as the simultaneous operation mode, the step of performing the operation mode includes opening the first inlet to flow the outdoor air into the pre-heat exchanger; flowing the room air into the pre-heat exchanger and preventing the room air from flowing into the heat exchanger; driving the air-supply fan unit to flow the outdoor air into the room; driving the air-exhaust fan unit to exhaust the room air to the outside; and flowing in and out the heat exchanger so that the refrigerant is heat-exchanged with the outdoor air in the heat exchanger.

Furthermore, the step of opening the first inlet is performed by opening the first switching damper arranged in the first inlet, and the step of preventing the air from flowing into the heat exchanger is performed by closing the second switching damper arranged between the second inlet and the heat exchanger.

In another aspect of the present invention, a control method for a ventilating apparatus comprises determining an operation mode as to whether any one of a cooling and heating operation mode, a ventilating operation mode, and a simultaneous operation mode has been selected, the simultaneous operation mode representing that the cooling and heating operation mode and the ventilating operation mode are simultaneously performed; and performing the operation mode by selecting any one of the ventilating operation mode through heat exchange between the room air and the outdoor air, the cooling and heating operation mode through heat exchange between the room air and a refrigerant, and the simultaneous operation mode through simultaneous operation of heat exchange between the room air and the outdoor air and heat exchange between the room air and the refrigerant, within a single ventilating apparatus in accordance with the determined operation mode.

Meanwhile, the step of performing the operation mode includes preventing the refrigerant from flowing into a heat exchanger during heat exchange between the room air and the outdoor air for the ventilation; guiding the outdoor air to a pre-heat exchanger using an air-supply fan unit; and guiding the room air to the pre-heat exchanger using an air-exhaust fan unit to generate heat exchange between the outdoor air and the room air in the pre-heat exchanger.

The step of performing the operation mode includes flowing the refrigerant into the heat exchanger during heat exchange between the room air and the refrigerant; connecting an inlet into which the room air flows with the heat exchanger to move the room air to the heat exchanger; and guiding the room air to the heat exchanger using the air-supply fan unit.

Meanwhile, the step of performing the simultaneous operation mode includes flowing the refrigerant into the heat exchanger; guiding the outdoor air to the pre-heat exchanger using the air-supply fan unit; guiding the room air to the pre-heat exchanger using the air-exhaust fan unit to generate heat exchange between the outdoor air and the room air in the pre-heat exchanger; driving the air-supply fan unit to guide the outdoor air heat-exchanged with the room air so as to be heat-exchanged with the refrigerant in the heat exchanger; driving the air-exhaust fan unit to guide the room air heat-exchanged with the outdoor air so as to be exhausted to the outside.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view illustrating the first embodiment of the present invention;

FIG. 2 is an exploded perspective view illustrating the first embodiment of the present invention;

FIG. 3 is a control block diagram according to the present invention;

FIG. 4a and FIG. 4b are side sectional views illustrating a simultaneous operation mode according to the first embodiment of the present invention;

FIG. 5a and FIG. 5b are side sectional views illustrating a ventilating operation mode according to the first embodiment of the present invention;

FIG. 6a and FIG. 6b are side sectional views illustrating a cooling and heating operation mode according to the first embodiment of the present invention;

FIG. 7 is a perspective view illustrating the second embodiment of the present invention;

FIG. 8 is an exploded perspective view illustrating the second embodiment of the present invention;

FIG. 9 is a side sectional view illustrating a simultaneous operation mode according to the second embodiment of the present invention;

FIG. 10 is a side sectional view illustrating a ventilating operation mode according to the second embodiment of the present invention;

FIG. 11 is a side sectional view illustrating a cooling and heating operation mode according to the second embodiment of the present invention; and

FIG. 12 is a control flow chart according to the present invention.

Reference will now be made in detail to the preferred embodiments of the present invention, examples of which are illustrated in the accompanying drawings. Wherever possible, the same reference numbers will be used throughout the drawings to refer to the same or like parts.

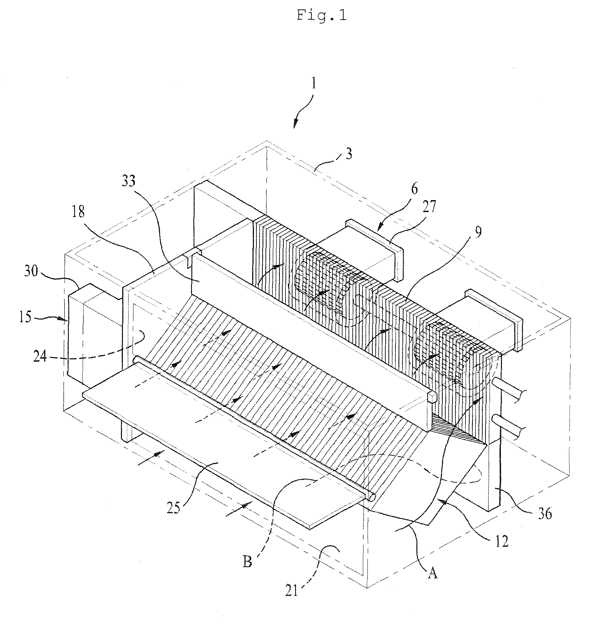

As illustrated in FIG. 1, a ventilating apparatus 1 according to the present invention includes a casing 3 constituting appearance, an air-supply fan unit 6 provided inside the casing 3, a heat exchanger 9 arranged at the rear of the air-supply fan unit 6, flowing a refrigerant therein, a pre-heat exchanger 12 provided to adjoin the heat exchanger 9, performing heat exchange between the room air and the outdoor air, and an air-exhaust fan unit 15 provided at one side of the pre-heat exchanger 12.

A section plate 18 is provided between the air-exhaust fan unit 15 and the pre-heat exchanger 12 to section the air-exhaust fan unit 15 and the pre-heat exchanger from each other.

Meanwhile, the casing 3 is respectively provided with a first inlet 21 into which the room air flows, a second inlet 24 into which the outdoor air flows. The casing 3 is also provided with a first outlet 27 where an outlet side of the air-supply fan unit 6 is arranged, and a second outlet where an outlet side of the air-exhaust fan unit 15 is arranged. In this case, it is preferable that the first inlet 21 and the second inlet 24 are arranged up and down.

The first inlet 21 is provided with a first switching damper that opens and closes the first inlet 21.

A second switching damper 33 is provided between the second inlet 24 and the heat exchanger 9 to open and close a path formed between the second inlet 24 and the heat exchanger 9. Preferably, the second switching damper 33 is rotatably arranged between an upper part inside the casing 1 and the pre-heat exchanger 12.

The second switching damper 33 opens and closes a space between the second inlet 24 and the heat exchanger 9. In this case, it is possible to control the air flowing into the second inlet 24 so that the air directly flows to the heat exchanger 9 without passing through the pre-heat exchanger 12.

Meanwhile, a heat exchanger supporter 36 is provided at a side of a lower part of the heat exchanger 9 to support the heat exchanger 9.

In this case, the first inlet 21, the pre-heat exchanger 12, the heat exchanger 9, and the air-supply fan unit 6 form an air-supply path A that supplies the outdoor air to the room.

The second inlet 24, the pre-heat exchanger 12, and the air-exhaust fan unit 15 form an air-exhaust path B that exhausts the room air to the outside.

In the above configuration, the first and second inlets 21 and 24 and the air-supply fan unit 6 and the air-exhaust fan unit 15 are respectively connected with a duct (not shown). The air flows in and out along the duct with respect to the ventilating apparatus 1.

Meanwhile, since the duct connected with the air-supply fan unit 6 is connected with an exhaust diffuser (not shown) arranged in one indoor space, if the air is exhausted from the air-supply fan unit 6, the air can uniformly be exhausted by the exhaust diffuser.

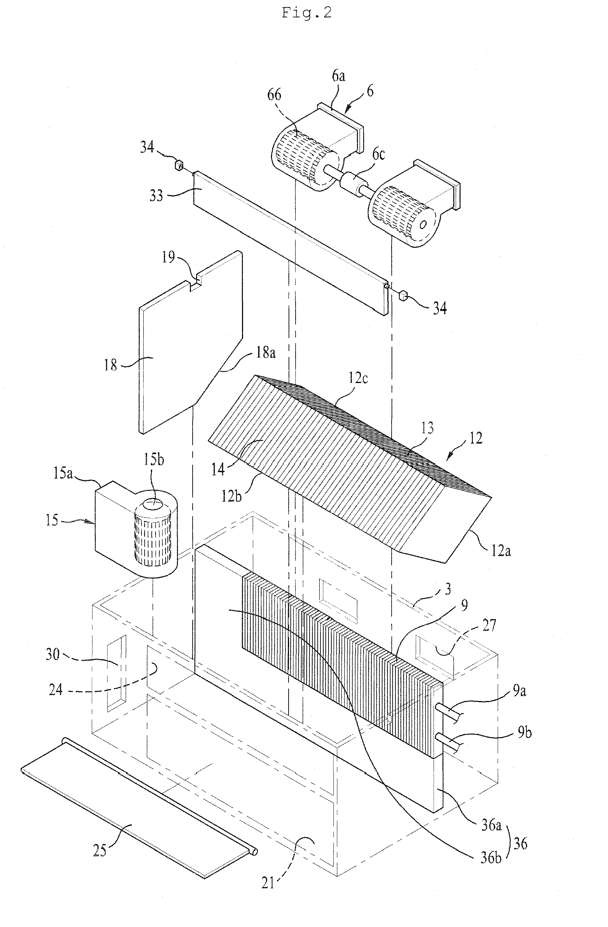

As illustrated in FIG. 2, the inside of the casing 3 is sectioned by the heat exchanger 9 and the heat exchanger supporter 36. The air-supply fan unit 6 is arranged in a part of the sectioned space, and the pre-heat exchanger 12 and the air-exhaust fan unit 15 are arranged in the other part of the sectioned space.

The air-supply fan unit 6 includes an air-supply fan casing 6a, an air-supply fan 6b received in the air-supply fan casing 6a, and a driving device 6c rotatably driving the air-supply fan 6b.

The air-exhaust fan unit 15 includes an air-exhaust fan casing 15a and an air-exhaust fan 15b received in the air-exhaust fan casing 15a.

Meanwhile, the section plate 18 that sections the pre-heat exchanger 12 from the air-exhaust fan unit 15 is provided with a cutting part 18a formed in a type of an incline plane to serve as a moving path if the air exhausted from the pre-heat exchanger 12 moves to the air-exhaust fan unit 15.

In this case, it is preferable that an incline angle of the cutting part 18a is provided to correspond to an incline part 12a formed at a side end of the pre-heat exchanger 12.

Meanwhile, an installation part 19 is formed at an upper part of the section plate 18. The installation part 19 is provided with a driving device 34 that rotates the second switching damper 33.

Preferably, the pre-heat exchanger 12 has a side section of a square shape, specifically a diamond shape. The pre-heat exchanger 12 includes a first path 13, and a second path 14 arranged to cross the first path 13. Boundary parts 12b and 12c are formed between the first path 13 and the second path 14.

In this case, if a part where the first and second inlets 21 and 24 are viewed is defined as the front side of the pre-heat exchanger 12 and a part where the heat exchanger 9 is viewed is defined as the rear side of the pre-heat exchanger 12, the first path 13 becomes a path that is connected from the front lower part to the rear upper part while the second path 14 becomes a path that is connected from the front upper part to the rear lower part. In this case, it is noted from the side section that these paths cross each other in an X-shape.

It is preferable that the boundary parts 12b and 12c of the pre-heat exchanger 12 are arranged to respectively adjoin an inner wall of the casing 3, in which the first and second inlets 21 and 24 are arranged, and the heat exchanger supporter 36.

Both sides of the pre-heat exchanger 12 should be laterally in contact with the inner wall of the casing 3 and the section plate 18 so as to prevent the wind from leaking out. In this case, the contact part may not form such a direct contact type. Namely, a separate sealing member (not shown) may be inserted to the contact part.

This is to separate the air-supply path A from the air-exhaust path B. Particularly, if the first inlet 21 and the second inlet 24 are arranged to be spaced apart from each other at a given interval up and down as illustrated in FIG. 2, it is preferable that the boundary part 12b adjoins the part between the first inlet 21 and the second inlet 24.

The heat exchanger supporter 36 includes a first supporter 36a that supports the lower surface of the heat exchanger 9, and a second supporter 36b that supports a side of the heat exchanger 9. The heat exchanger supporter 36 is arranged as above so as to support the heat exchanger 9 and at the same time adjoin the air, which is to be flown to the outside, to the heat exchanger 9, thereby avoiding heat-exchange.

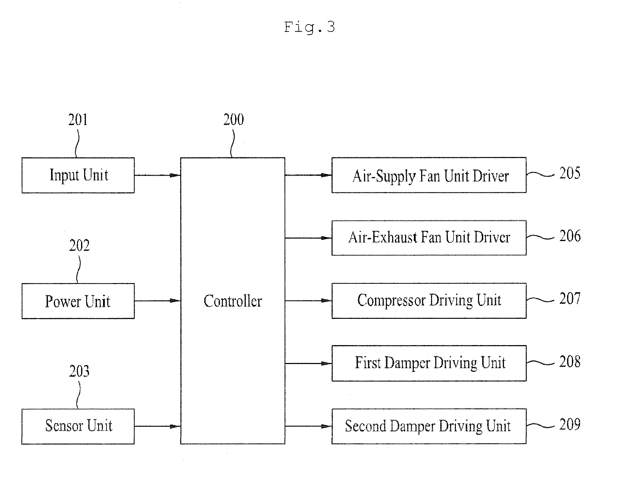

FIG. 3 illustrates a control block diagram according to the present invention. The control block diagram is commonly applied to both the configuration of the first embodiment and the configuration of the second embodiment.

In other words, a controller 200 controlling the operation of each element is provided inside the ventilating apparatus, and an input unit 201 and a power unit 202 are provided at an input side of the controller 200, wherein the input unit 201 allows a user to select an operation mode, and the power unit 202 supplies the power.

Also, it is preferable that a sensor unit 203 is connected with the controller 200. The sensor unit 203 serves to sense a temperature of the air, wind pressure, etc.

Meanwhile, at an output side of the controller 200, there are provided an air-supply fan unit driver 205 driving the air-supply fan unit, an air-exhaust fan unit driver 206 driving the air-exhaust fan unit, and a compressor driving unit 207 driving a compressor that compresses a refrigerant.

Also, since a first damper driving unit 208 and a second damper driving unit 209 are also connected with the controller 200, switching of the first and second switching dampers is controlled by the control operation of the controller 200. The first and second damper driving units 208 and 209 serve to drive the first and second switching dampers.

Hereinafter, the control operation according to the first embodiment of the present invention will be described with reference to the accompanying drawings.

First of all, the operation mode of the ventilating apparatus according to the present invention includes a ventilating operation mode, a cooling and heating operation mode, and a simultaneous operation mode where the ventilating operation mode and the cooling and heating operation mode are simultaneously performed.

The simultaneous operation mode will be described.

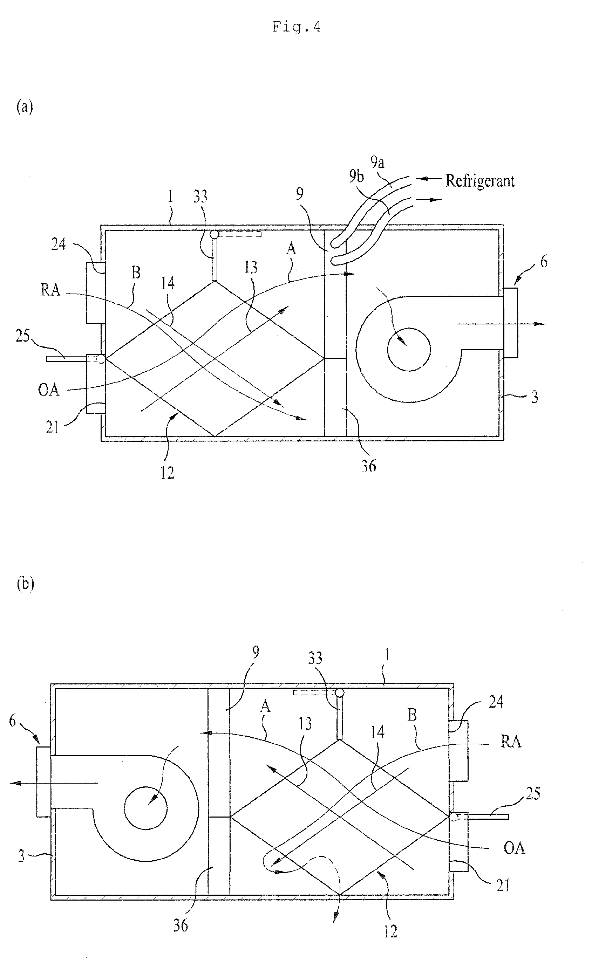

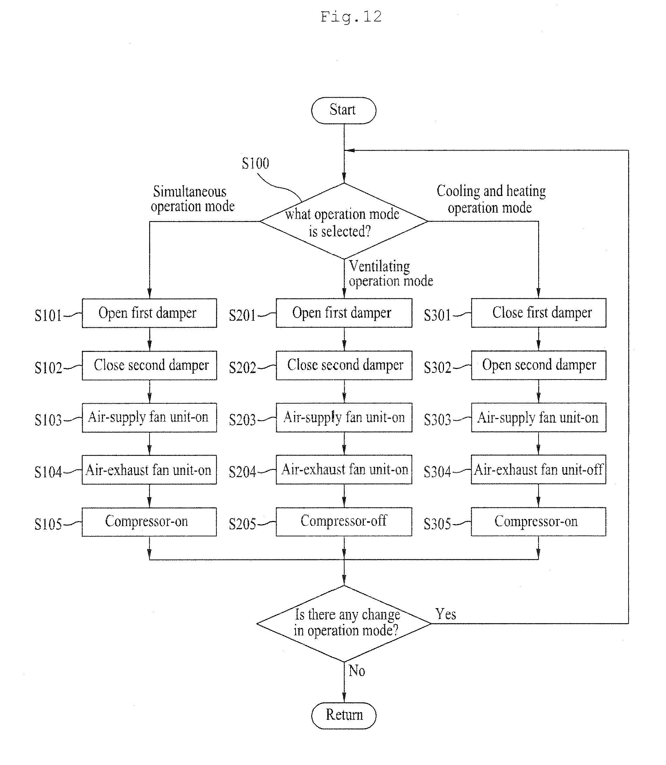

As illustrated in FIG. 4a, FIG. 4b, and FIG. 12, after it is determined which operation mode has been selected (S100 in FIG. 12), if the simultaneous operation mode is selected, the first switching damper 25 provided at the first inlet 21 is opened and at the same time the second switching damper 33 provided at the upper part of the pre-heat exchanger 12 is closed (S101 and S102 in FIG. 12).

In this state, the air-supply fan unit 6 and the air-exhaust fan unit 15 (see FIG. 2) are operated in due order (S103 and S104 in FIG. 12). The compressor connected with the ventilating apparatus is operated to transfer the refrigerant to refrigerant pipes 9a and 9b connected with the heat exchanger 9. Then, the refrigerant flows inside the heat exchanger 9.

If each of the above elements is operated as above, the outdoor air OA flows into the first inlet 21 and passes through the first path 13 provided in the pre-heat exchanger 12. Then, the air is exhausted to the inside through the air-supply fan unit 6 after being exchanged with heat in the heat exchanger 9. The path where the outdoor air OA flows has been referred to as the air-supply path A.

As described above, the air-supply path A includes the first inlet 21, and a path formed by flow of the air passing through the pre-heat exchanger 12, the heat exchanger 9 and the air-supply fan unit 6.

Meanwhile, simultaneously with inflow of the outdoor air OA, the room air RA also flows toward the second inlet 24. After the air which has passed through the second inlet 24 passes through the second path 14 of the pre-heat exchanger 12, the air moves to the air-exhaust fan unit 15 and then is exhausted to the outside.

The path where the room air RA flows has been referred to as the air-exhaust path B.

As described above, the air-exhaust path B includes the second inlet 24, and a path formed by flow of the air passing through the pre-heat exchanger 12, and the air-exhaust fan unit 15.

In the aforementioned simultaneous operation mode, the room air RA and the outdoor air OA are mutually heat-exchanged in the pre-heat exchanger 12.

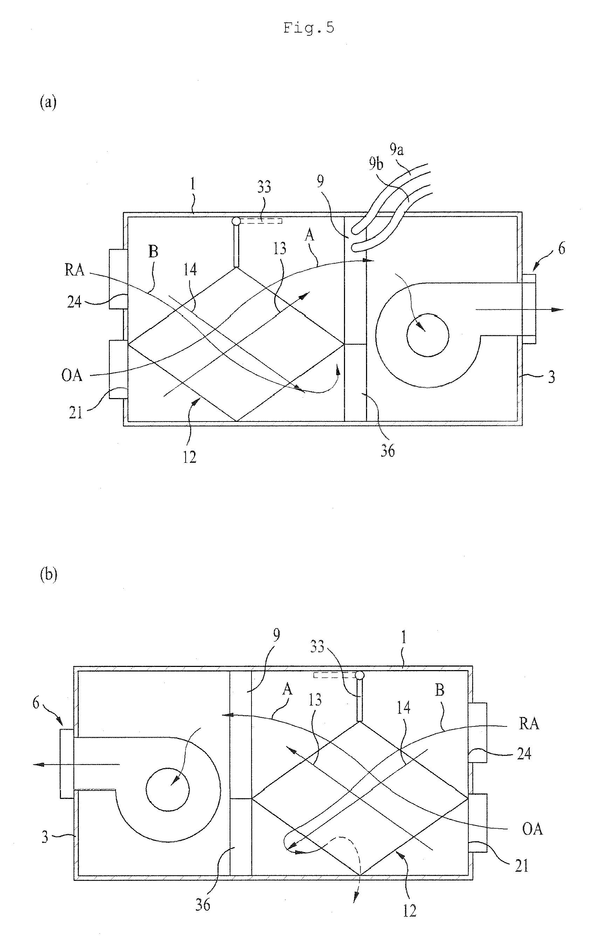

FIG. 5a and FIG. 5b illustrate that the ventilating operation mode is selected. At this time, a control flow is illustrated in FIG. 12. The refrigerant does not flow into the heat exchanger 9. The outdoor air OA and the room air RA are heat-exchanged in the pre-heat exchanger 12. The outdoor air OA flows along the air-supply path A while the room air RA flows along the air-exhaust path B.

The operation of each element in the ventilating operation mode is the same as that of the simultaneous operation mode except that the refrigerant does not flow into the heat exchanger 9 and thus the outdoor air OA is not heat-exchanged in the heat exchanger 9. Accordingly, the detailed description of the operation of each element in the ventilating operation mode will be omitted.

In other words, as illustrated in FIG. 12, the control flow of the ventilating operation mode is the same as that of the simultaneous operation mode except that the compressor maintains off-state so as not to flow the refrigerant into the heat-exchanger (S205 in FIG. 12).

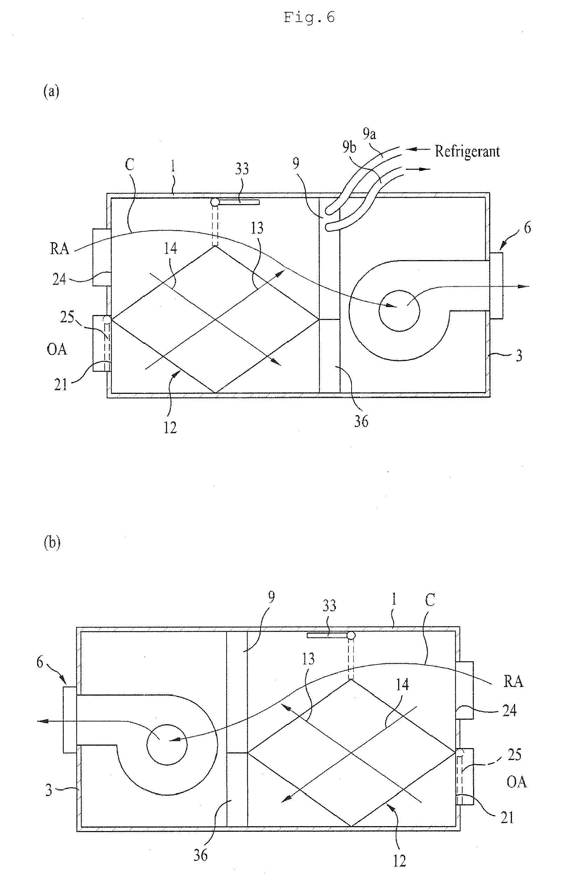

FIG. 6a and FIG. 6b illustrate that the cooling and heating operation mode is selected.

If the cooling and heating operation mode is selected, the room air RA is not exhausted to the outside but circulates inside the room. Also, the outdoor air OA should not flow into the ventilating apparatus.

Accordingly, the first inlet 21 is closed by the first switching damper 25 so as not to flow the outdoor air OA into the ventilating apparatus (S301 in FIG. 12). The second switching damper 33 opens the space between the heat exchanger 9 and the second inlet 24 so that the room air RA directly moves to the heat exchanger 9 without passing through the pre-heat exchanger 12.

The air-supply fan unit 6 should start to be operated, and the air-exhaust fan unit 15 should be stopped (S303 and S304 in FIG. 12).

The refrigerant is compressed in the compressor so that the air flown by the air-supply fan unit 6 is heat-exchanged in the heat exchanger 9. Then, the refrigerant flows into the heat exchanger 9 through the refrigerant pipes 9a and 9b.

Accordingly, if the cooling and heating operation mode is operated, the room air circulates in the same manner as a general air-conditioner, whereby room-cooling or room-heating are performed.

Hereinafter, the second embodiment of the present invention will be described with reference to the accompanying drawings.

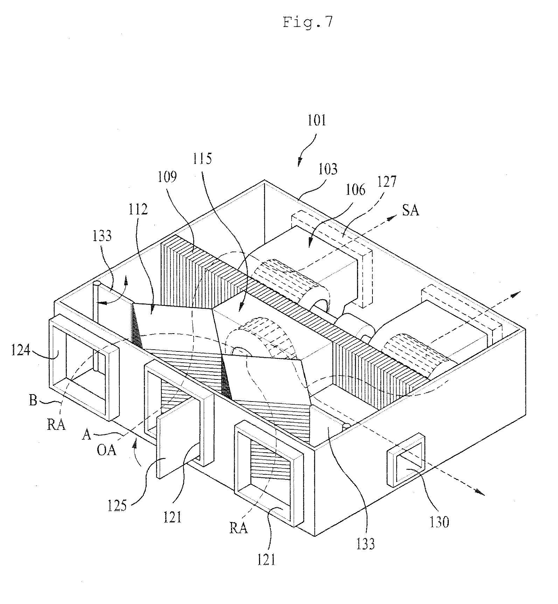

As illustrated in FIG. 7, the ventilating apparatus according to the second embodiment of the present invention includes a casing 103, an air-supply fan unit 106 provided inside the casing 103, a heat exchanger 109 arranged at the rear of the air-supply fan unit 106, and an air-exhaust fan unit 115 provided to adjoin the heat exchanger 109.

An exhaust part of the air-supply fan unit 106 is arranged in a first outlet 127 provided at a side of the casing 103.

Meanwhile, the heat exchanger 109 should be arranged between the air-exhaust fan unit 115 and the air-supply fan unit 106.

A pre-heat exchanger 112 is provided at one side of the air-exhaust fan unit 115 to perform heat exchange between the room air RA and the outdoor air OA. The casing 103 is provided with a first inlet 121 into which the outdoor air OA flows, and a second inlet 124 into which the room air RA flows. The first inlet 121 is provided with a first switching damper 125 that switches a flow of the air.

Preferably, the first inlet 121 and the second inlet 124 are arranged in parallel in left and right directions, and are spaced apart from each other.

Meanwhile, a second switching damper 133 is provided between the pre-heat exchanger 112 and an inner wall of the casing 103 to control a flow of the air, whereby the air flowing into the second inlet 124 directly flows into the heat exchanger 109.

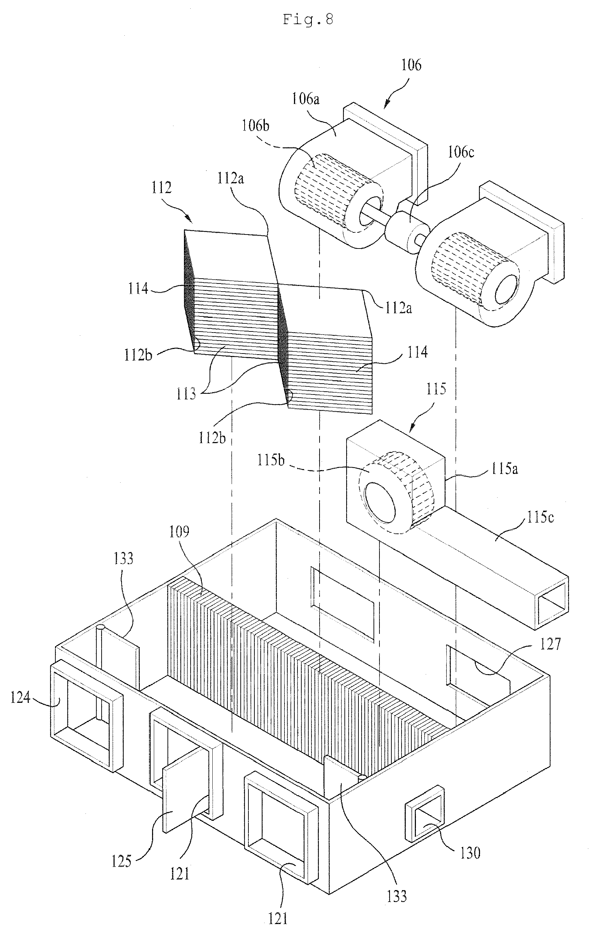

As illustrated in FIG. 8, it is preferable that the pre-heat exchanger 112 has an upper section of a square shape, specifically a diamond shape. Also, it is preferable that a plurality of pre-heat exchangers 112 are provided to adjoin one another.

In this case, the upper section of the pre-heat exchangers 112 has an arrangement where diamond shapes are continuously arranged. Preferably, the pre-heat exchangers 112 are arranged in such a manner that their corners are linearly in contact with one another.

At this time, since it is important that the air does not leak out through the contact part, a separate contact member that connects the respective pre-heat exchangers 112 with one another may preferably be provided.

The pre-heat exchanger 112 is provided with a first path 113 through which the outdoor air passes and a second path 114 through which the room air RA passes. Boundary parts 112a and 112b are provided at the corner of the pre-heat exchanger 112, and form the boundary between the first path 113 and the second path 114.

The boundary parts 112a and 112b should be arranged to adjoin the air-exhaust fan unit 115 and the casing 103. This is to allow the outdoor OA not to be mixed with the room air RA.

The boundary part 112a of the boundary parts adjoins an air-exhaust fan casing 115a constituting appearance of the air-exhaust fan unit 115, and the other boundary part 112b adjoins a part between the first inlet 121 and the second inlet 124.

In this case, the air-exhaust fan unit 115 is arranged to view the space formed between the boundary parts 112a of the respective pre-heat exchangers 112.

The air-exhaust fan unit 115 includes the air-exhausting fan casing 115a, an exhausting fan 115b, and an exhaust duct 115c extended from the exhaust fan casing 115a. The exhaust duct 115c is connected to a second exhaust unit 130 formed in the casing 103.

In this case, the height of the exhaust duct 115c should be lower than the air-exhaust fan casing 115a. This is because that the outdoor air OA should flow above the exhaust duct 115c and then move to the heat exchanger 109.

Preferably, the contact part between the boundary part 112a of the pre-heat exchanger and the air-exhaust fan casing 115a and the contact part between the inner wall of the casing 103 and the boundary part 112b of the pre-heat exchanger are sealed such that the outdoor air OA is not mixed with the room air RA.

The second switching damper 133 provided at both sides of the pre-heat exchanger 112 is spaced apart from the second inlet 124 at a given interval and rotatably arranged in the inner wall of the casing 103.

Hereinafter, the operation according to the second embodiment of the present invention will be described with reference to the accompanying drawings.

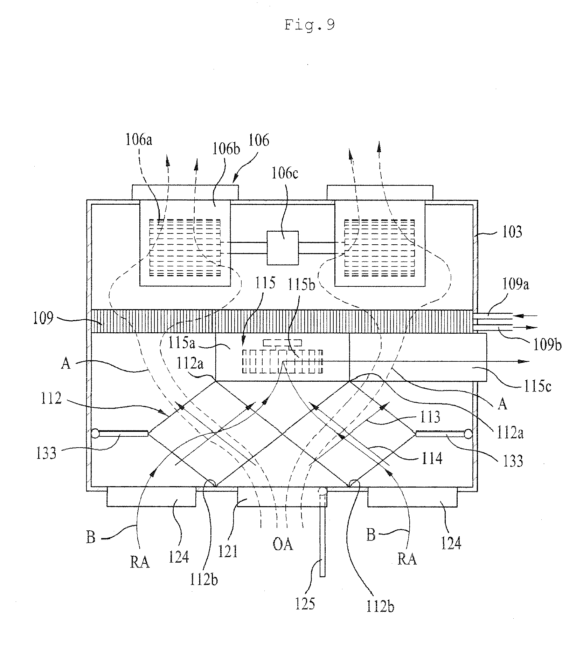

As illustrated in FIG. 9 and FIG. 12, if the simultaneous operation mode is operated, the first switching damper 125 opens the first inlet 121 (S101 in FIG. 12), and the second switching damper 133 is closed (S101 and S102 in FIG. 12). At the same time, the air-supply fan unit 106 and the air-exhaust fan unit 115 are operated (S103 and S104 in FIG. 12).

At this time, the second switching damper 133 should be closed, and the compressor supplies the refrigerant to the heat exchanger 109 while performing compression (S105 in FIG. 12).

If each of the above elements is operated as above, the outdoor air OA flows into the room through the air-supply path A. The air-supply path A includes the first inlet 121, the first path 113 of the pre-heat exchanger 112, and a path forming a flow of the air between the heat exchanger 9 and the air-supply fan unit 106.

Meanwhile, simultaneously with inflow of the outdoor air OA, the room air RA also flows through the second inlet 124 and then exhausts out through the air-exhaust path B. The air-exhaust path B includes the second inlet 124, the second path 114 of the pre-heat exchanger 112, and a path forming a flow of the air between the heat exchanger and the air-exhaust fan unit 115.

As described above, the outdoor air OA and the room air RA flow along their respective path, and are crossed with each other and heat-exchanged in the pre-heat exchanger 112. If the simultaneous operation mode is operated, ventilation and cooling and heating can be performed by one operation mode in due order.

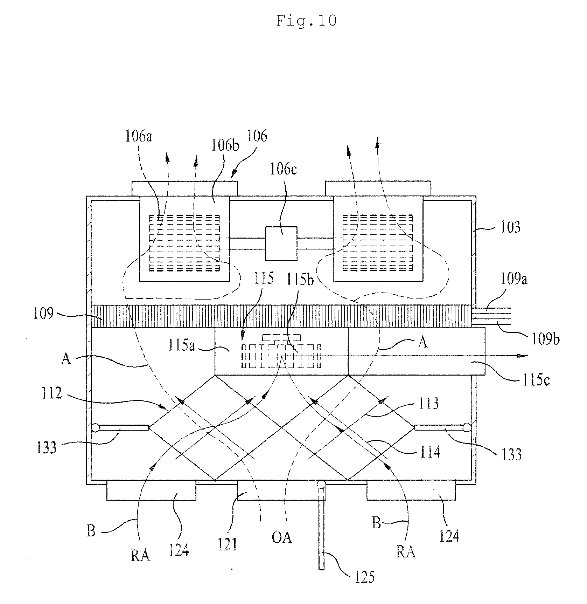

FIG. 10 illustrates that the ventilating operation mode is selected. The operation of each element in the ventilating operation mode is the same as that of the simultaneous operation mode except that the refrigerant does not flow into the heat exchanger 109 and thus heat exchange is not performed between the refrigerant and the outdoor air OA. Accordingly, the detailed description of the operation of each element in the ventilating operation mode will be omitted.

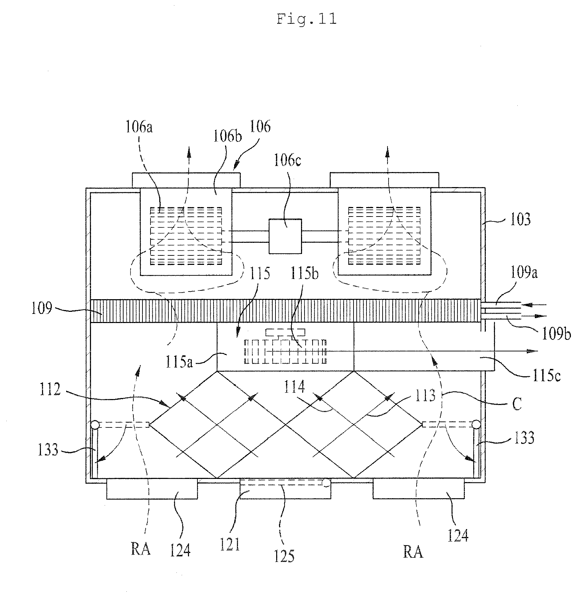

FIG. 11 illustrates that the cooling and heating operation mode is selected. In case of the cooling and heating operation mode, only the room air RA continues to circulate. Since inflow of the outdoor air OA is not required, the first inlet 121 is closed by the first switching damper 125 (S301 in FIG. 12).

By contrast, since the room air RA should directly flow into the heat exchanger 109 without passing through the pre-heat exchanger 112, the second switching damper 133 is opened to connect the second inlet 124 with the heat exchanger 109 (S302 in FIG. 12).

At this time, the air-supply fan unit 106 is operated but the air-exhaust fan unit 115 is not operated (S303 and S304 in FIG. 12).

The compressor is operated to flow the refrigerant into the heat exchanger 109 (S305 in FIG. 12).

Accordingly, if the air-supply fan unit 106 is operated, the room air RA flows into the second inlet 124 like C by inflow action of the air and then directly moves to the heat exchanger 109, whereby the air is heat-exchanged with the refrigerant and then exhausted to the room through the air-supply fan unit 106.

As will be apparent from the first embodiment and the second embodiment, since heat exchange between the refrigerant and the air and heat exchange between the room air and the outdoor air can occur in one casing, the product of a compact size can be obtained and space efficiency in installation of the product can be obtained.

In the first embodiment and the second embodiment, since the duct connected with the air-supply fan units 6 and 106 is connected with a plurality of exhaust diffusers provided in one room, the air exhausted to the room can uniformly be exhausted to the room through all exhaust diffusers.

As described above, according to the present invention, ventilation and cooling and heating are performed within a building and at the same time sizes of the units required for ventilation and cooling and heating can be minimized to improve space efficiency.

Since the units and pipes to be arranged are reduced, the cost required for arrangement and purchase of the product can be reduced.

Furthermore, if the air is exhausted to the room, the exhausted air is distributed at a uniform temperature. Also, air-conditioning can be performed suitably for a setting range of the user with respect to the fresh air from the outside. Accordingly, a comfortable room atmosphere can be obtained.

Finally, since the ventilating apparatus according to the present invention is connected with each outlet provided in one room, each outlet can be used more efficiently during ventilation or cooling and heating, whereby ventilating effect or cooling and heating effect can quickly reach the entire of the room.

## Claims

1. A control method for a ventilating apparatus comprising:
determining an operation mode; and
performing the operation mode such as a ventilating operation mode and a cooling and heating operation mode respectively or simultaneously within a single ventilating apparatus in accordance with the determined operation mode.

2. The control method for a ventilating apparatus of claim 1, wherein the operation mode includes:
a ventilating operation mode performing heat exchange between the outdoor air and the room air in a pre-heat exchanger while flowing in the outdoor air and flowing out the room air;
a cooling and heating operation mode performing heat exchange between the room air and a refrigerant of a heat exchanger; and
a simultaneous operation mode performing the ventilating operation mode and the cooling and heating operation mode.

3. The control method for a ventilating apparatus of claim 2, wherein if the operation mode is determined as the ventilating operation mode, the step of performing the operation mode includes:
opening a first inlet to flow the outdoor air into a pre-heat exchanger;
flowing the room air into the pre-heat exchanger and a second inlet and preventing the room air from flowing into a heat exchanger;
driving an air-supply fan unit to flow the outdoor air into a room; and
driving an air-exhaust fan unit to exhaust the room air to the outside.

4. The control method for a ventilating apparatus of claim 3, wherein the step of opening the first inlet is performed by opening a first switching damper arranged in the first inlet, and the step of preventing the air from flowing into the heat exchanger is performed by closing a second switching damper arranged between the second inlet and the heat exchanger.

5. The control method for a ventilating apparatus of claim 2, wherein if the operation mode is determined as the cooling and heating operation mode, the step of performing the operation mode includes:
preventing the outdoor air from flowing into the first inlet;
guiding the room air to directly flow into the heat exchanger after flowing into the second inlet;
driving the air-supply fan unit to move the room air to the heat exchanger; and
flowing the refrigerant in and out the heat exchanger so that the refrigerant is heat-exchanged with the room air in the heat exchanger.

6. The control method for a ventilating apparatus of claim 5, wherein the step of preventing the outdoor air from flowing into the first inlet is performed by closing the first switching damper provided in the first inlet, and the step of guiding the room air to directly flow into the heat exchanger is performed by opening the second switching damper provided between the heat exchanger and the second inlet.

7. The control method for a ventilating apparatus of claim 2, wherein if the operation mode is determined as the simultaneous operation mode, the step of performing the operation mode includes:
opening the first inlet to flow the outdoor air into the pre-heat exchanger;
flowing the room air into the pre-heat exchanger and preventing the room air from flowing into the heat exchanger;
driving the air-supply fan unit to flow the outdoor air into the room;
driving the air-exhaust fan unit to exhaust the room air to the outside; and
flowing the refrigerant in and out the heat exchanger so that the refrigerant is heat-exchanged with the outdoor air in the heat exchanger.

8. The control method for a ventilating apparatus of claim 7, wherein the step of opening the first inlet is performed by opening the first switching damper arranged in the first inlet, and the step of preventing the air from flowing into the heat exchanger is performed by closing the second switching damper arranged between the second inlet and the heat exchanger.

9. A control method for a ventilating apparatus comprising:
determining an operation mode as to whether any one of a cooling and heating operation mode, a ventilating operation mode, and a simultaneous operation mode has been selected, the simultaneous operation mode representing that the cooling and heating operation mode and the ventilating operation mode are simultaneously performed; and
performing the operation mode by selecting any one of the ventilating operation mode through heat exchange between the room air and the outdoor air, the cooling and heating operation mode through heat exchange between the room air and a refrigerant, and the simultaneous operation mode through simultaneous operation of heat exchange between the room air and the outdoor air and heat exchange between the room air and the refrigerant, within a single ventilating apparatus in accordance with the determined operation mode.

10. The control method for a ventilating apparatus of claim 9, wherein the step of performing the operation mode includes:
preventing the refrigerant from flowing into a heat exchanger during heat exchange between the room air and the outdoor air for the ventilation;
guiding the outdoor air to a pre-heat exchanger using an air-supply fan unit; and
guiding the room air to the pre-heat exchanger using an air-exhaust fan unit to generate heat exchange between the outdoor air and the room air in the pre-heat exchanger.

11. The control method for a ventilating apparatus of claim 9, wherein the step of performing the operation mode includes:
flowing the refrigerant into the heat exchanger during heat exchange between the room air and the refrigerant;
connecting an inlet into which the room air flows with the heat exchanger to move the room air to the heat exchanger; and
guiding the room air to the heat exchanger using the air-supply fan unit.

12. The control method for a ventilating apparatus of claim 9, wherein the step of performing the simultaneous operation mode includes:
flowing the refrigerant into the heat exchanger;
guiding the outdoor air to the pre-heat exchanger using the air-supply fan unit;
guiding the room air to the pre-heat exchanger using the air-exhaust fan unit to generate heat exchange between the outdoor air and the room air in the pre-heat exchanger;
driving the air-supply fan unit to guide the outdoor air heat-exchanged with the room air so as to be heat-exchanged with the refrigerant in the heat exchanger; and
driving the air-exhaust fan unit to guide the room air heat-exchanged with the outdoor air so as to be exhausted to the outside.
